Europäisches Patentamt

European Patent Office

Office européen des brevets

(11) Publication number: **0 351 951**
**A2**

## (12) EUROPEAN PATENT APPLICATION

(21) Application number: 89306122.6

(22) Date of filing: 16.06.89

(51) Int. Cl.⁴: **G06F 3/03**

(30) Priority: 21.07.88 US 222417

(43) Date of publication of application:
**24.01.90 Bulletin 90/04**

(84) Designated Contracting States:
**DE FR GB NL**

(71) Applicant: **PICKER INTERNATIONAL, INC.**
**595 Miner Road**
**Highland Heights Ohio 44143(US)**

(72) Inventor: **Wislocki, Nicholas C.**
**3275 Perl Court**
**North Royalton Ohio 44133(US)**

(74) Representative: **Pope, Michael Bertram**
**Wingate**
**Central Patent Department Wembley Office**
**The General Electric Company, p.l.c. Hirst**
**Research Centre East Lane**
**Wembley Middlesex HA9 7PP(GB)**

(54) Devices for and methods of encoding variables.

(57) A first electromechanical transducer (40) generates a first electrical signal indicative of rotation of a ball (A) relative to a first axis. A second electromechanical transducer (50) generates a second electrical signal indicative of rotation of the ball (A) relative to a second axis. A third electromechanical transducer (60) generates a third electrical signal indicative of rotation of an annular ring (12) around the periphery of the ball (A). A resolver circuit (D) utilises the first, second and third electrical signals for control purposes.

FIG.1

EP 0 351 951 A2

## Devices for and Methods of Encoding Variables

This invention relates to devices for and methods of encoding variables.

The invention finds particular application for operator manipulation of portions of video displays relative to three axes and will be described with particular reference thereto. For example, the device may be used to shift a cursor or portions of a video display on a cathode ray tube screen, vertically, longitudinally, or rotationally, i.e. a three axis manipulation. Such manipulations may be performed to move, align, or otherwise position medical diagnostic images. The invention is also applicable to cursor manipulation for home computer terminals, video games, CAD/CAM systems, and the like.

Heretofore, devices in the form of track balls capable of encoding two or three variables have been readily available. Typically, a track ball capable of encoding two variables was supported on two perpendicular rollers. Frictional engagement between the ball and the rollers caused rotation of the ball to be translated into corresponding rotation of each roller. More specifically, the rotation of each roller was indicative of rotation of the ball about an axis parallel to the central axis of the roller. Transducers were connected with each roller to convert the rotation of the corresponding roller into electrical signals, e.g. an electrical pulse signal for each increment of a rotation.

For a track ball capable of encoding three variables, a third roller was positioned in frictional engagement with the ball. Normally, the three rollers were positioned with their central axes parallel to orthogonal coordinates. More specifically, a first roller was normally positioned to measure left and right rotational movement of the ball, a second roller to measure forward and aft rotation of the ball, and a third roller to measure rotation of the ball about a vertical axis. To rotate the ball and encode about the first two axes, one can normally palm the ball and merely push in the desired direction. To encode about the vertical axis, one must normally grab the ball with the fingers and twist.

One of the problems with the prior art balls, capable of encoding three variables, particularly smaller diameter balls, resided in the difficulty to encode about the third or vertical axis. Most operators lacked sufficiently fine motor skills and coordination to rotate the ball about the vertical axis without also causing rotation about one or both of the horizontal axes. By way of example, most operators could not rotate a displayed cursor without also shifting its centre of rotation.

It is an object of the present invention to provide a device for and method of encoding variables wherein the above problem is overcome.

According to a first aspect of the present invention there is provided a device for encoding variables comprising: a rotatably mounted ball; first sensing means for sensing rotation of said ball relative to a first axis; and second sensing means for sensing rotation of said ball relative to a second axis, the sensing means providing outputs which encode the variables, characterised in that said device further includes: means mounted peripherally of said ball for movement around said ball; and third sensing means for sensing movement of said means mounted peripherally around said ball.

According to a second aspect of the present invention there is provided a method of encoding variables comprising: rotating a ball; sensing rotation of the ball relative to a first axis; and sensing rotation of the ball relative a second axis, the sensing providing outputs which encode the variables, characterised in that said method further includes: moving a means mounted peripherally of the ball around the ball; and sensing the movement of the means mounted peripherally.

Two devices for and methods of encoding variables in accordance with the present invention will now be described, by way of example, with reference to the accompanying drawings, in which:-

Figure 1 is an exploded view in partial section of the first device; and

Figure 2 is a perspective view of the second device.

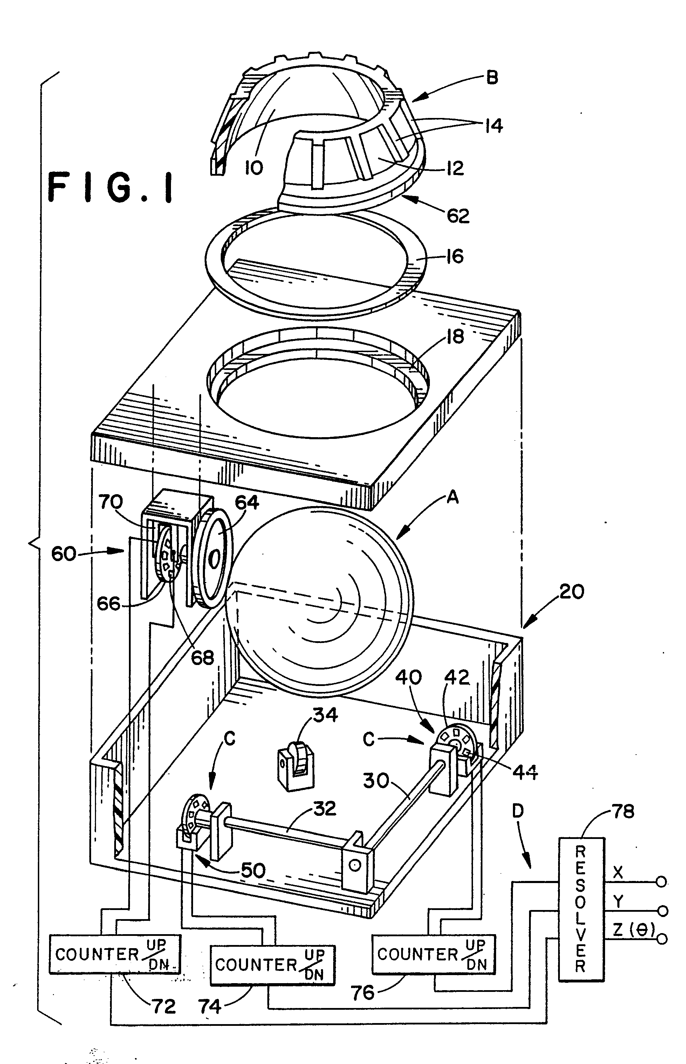

Referring to Figure 1, the first device includes a ball member A mounted for free rotation. A ring or peripheral member B is mounted to be rotated about the ball member. The ring is mounted closely adjacent the ball member such that grasping and rotating the ring is a fine motor movement analogous to grasping the rotating the ball member. Sensing means C sense rotation of the ball and ring members about three axes. A resolver means D converts the outputs of the sensing means into x, y and z (or $\theta$ (theta)) coordinate values for the control of associated equipment.

The ball member A is a solid or hollow spherical member of plastic, or the like. For a ball arrangement capable of encoding three variables, the ball member is preferably rotatable about only two axes. Accordingly, rather than being a true sphere, the ball member may include grooves, projections, or other structures which limit its movement to rotation about the two axes.

The ring member B has an interior surface 10 shaped to accommodate the curvature of the ball member A. Optionally, a lubricant surface or coating may be provided along the inner ring surface to provide improved isolation of movement between the ball and ring members. The ring member further has an upper surface 12 having a plurality of ridges or other grip improving means 14. In the illustrated embodiment, the upper ring surface is disposed at an angle, preferably, generally tangential to the surface of the ball at the point which the ball projects through the ring. A bearing 16 supports the ring member in a track 18 in the upper surface of a housing 20. Although the ring member is shown as a complete annulus, it is to be appreciated that it need not fully encircle the ball. Rather, a C-shaped ring member might be provided or even a single handle or gripping portion which runs in a ring-like track such that the handle or member can be rotated around the ball.

The ball member A is supported on a first rod or roller member 30 which is mounted for rotation about its longitudinal axis. The ball is further supported by a second roller or rod 32 which is rotatable about its longitudinal axis. In the preferred embodiment, the first and second rollers are perpendicular to each other such that the first and second encoding axes are likewise perpendicular. An additional roller bearing means 34, such as another rod or roller bearing, or a ball bearing is provided to provide stable, rotatable support for the ball member A. The ball member and the first and second rods interengage with sufficient friction that rotation of the ball causes corresponding rotation of the rod members.

The sensing means C includes a first rotational sensor assembly 40 for sensing rotation of the first rod. Various rotation to electrical signal transducers may be utilized as are conventional in the art. For example, the transducer may include a disc 42 having a plurality of apertures 44 therein mounted for rotation with the first rod. A light source, such as one or more light emitting diodes and a pair of light detectors, such as photodiodes, create a pair of pulse trains whose frequency varies with the speed of rotation. By positioning the photodiodes such that the light paths are displaced circumferentially around the disc by a different spacing than the apertures 44, the relative phase of the pulse trains indicates the sense of the rotation.

A second motion sensing means 50 includes an electromechanical transducer which converts rotation of the ball and second rod into corresponding electrical signals. In the preferred embodiment, the second motion sensing means 50 has the same construction as the first motion sensing means 40. Rather than a light and photodetector, other sensing arrangements may be provided. For example, a magnetic and reed switch arrangement, a cam and mechanical switch, an induction coil arrangement, or the like, may be utilized.

A third motion sensing means 60 converts movement of the ring 14 into corresponding electrical signals. In the illustrated embodiment, the third motion sensing means includes a track 62 on the ring member which engages a friction wheel gear 64. The wheel 64 drives a disc 66 having a plurality of apertures 68 therein. A light emitting dicde-photodetector arrangement 70 or the like generates the electrical signal in response to rotation of the disc 66. The relative diameters of the track 62 are selected to achieve an appropriate frequency for the output signal. In the preferred embodiment, the third transducer 70 produces an output signal of substantially the same frequency or count rate for a particular rate of rotation as the first and second transducers 40 and 50. Other motion sensing means may also be used to detect ring rotation. For example, a flange on the ring may interact directly with a photodiode/photodetector assembly, a magnet/reed switch assembly, or mechanical switch assembly, or the like.

The resolving circuitry D includes an up/down counter 72, 74, 76 connected to each of the transducers. Rotation of the encoding disk in one direction increments the count; and rotation in the other direction decrements the count. A resolver or position controller 78 utilises the counts for the control of associated equipment. For example, the resolver 78 may alter a video signal to shift, enlarge, rotate, etc. the portion displayed on a video monitor. Alternately, the resolver may control a means for reading data from an image memory to adjust which pixel values are displayed such that the displayed image is shifted, rotated, enlarged, or the like. Analogously, the resolver may provide the signal to control the position of a superimposed image or image segment, such as a cursor, marker, character, rectangle periphery, or the like.

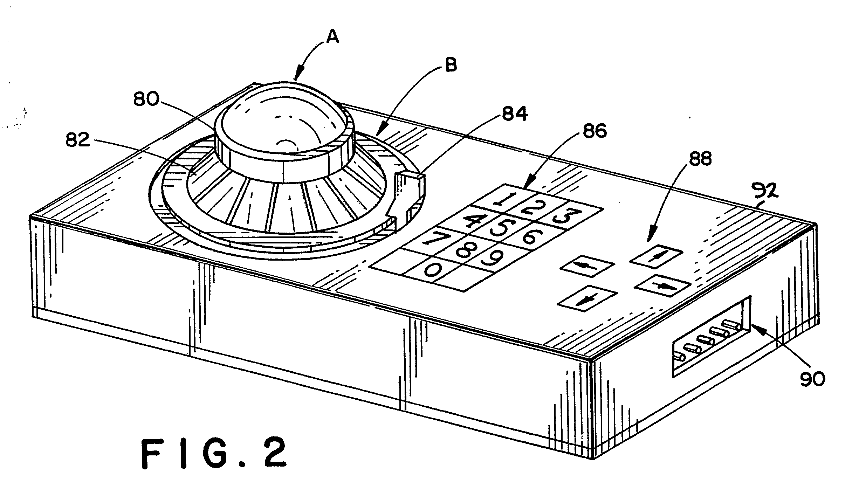

Optionally, additional motions can be monitored to encode other variables. For example, an additional roller (not shown) and transducer assembly (not shown) may be provided with the roller mounted perpendicular to the first and second rollers 30, 32 and biased in firm frictional contact with the ball A. In this manner three degrees of motion can be monitored and thus three variables encoded with the ball A and a fourth degree of motion monitored and thus a fourth variable encoded with the ring B. Further, additional rings or peripheral members may be provided, e.g. concentric with the first ring B, to allow encoding of further variables, as will now be described with reference to Figure 2.

In the embodiment of Figure 2, a housing 92 supports a first or inner ring member 80 closely surrounding a ball member A. In the illustrated embodiment, the first or inner ring member 80 is a vertical cylinder. A second ring member 82 in the form of a truncated cone, surrounds the first ring member 80. A third ring member 84 in the form of a handle or manually graspable portion which moves in a peripheral slot or groove in the housing 92 provides for yet another variable encoding. If three variables can be encoded using the roller ball A, six variables can be encoded in total. A key board 86 enables additional variables to be encoded by enabling entry of commands to change the variable encoded by each ring or the like 80, 82, 84 and the ball member A. Other control buttons 88 for encoding, for example x and y coordinates, may also be mounted in the housing 92. A socket 90 facilitates interconnection with associated equipment.

## Claims

1. A device for encoding variables (x, y, z or θ) comprising: a rotatably mounted ball (A); first sensing means (40) for sensing rotation of said ball (A) relative to a first axis; and second sensing means (50) for sensing rotation of said ball (A) relative to a second axis, the sensing means (40, 50, 60) providing outputs which encode the variables (x, y, z or θ), characterised in that said device further includes: means (B) mounted peripherally of said ball (A) for movement around said ball (A); and third sensing means (60) for sensing movement of said means (B) mounted peripherally around said ball (A).

2. A device according to Claim 1 wherein said means (B) mounted peripherally comprises a ring (B) encircling said ball (A).

3. A device according to Claim 2 wherein said ring (B) has an angled outer surface (12).

4. A device according to Claim 3 wherein said angled outer surface (12) is generally tangential to the surface of said ball (A).

5. A device according to Claim 3 or Claim 4 wherein said angled outer surface (12) is textured to facilitate manual grasping.

6. A device according to Claim 1 wherein said means (B) mounted peripherally comprises a handle (84) slidably mounted in a groove which encircles said ball (A).

7. A device according to any one of Claims 1 to 6 wherein: said first means (40) for sensing comprises a first electromechanical transducer for converting sensed rotation of said ball (A) relative to said first axis into a first electrical signal; said second means (50) for sensing comprises a second electromechanical transducer for converting sensed rotation of said ball (A) relative to said second axis into a second electrical signal; and said third means (60) for sensing comprises a third electromechanical transducer for converting sensed movement of said means (B) mounted peripherally around said ball (A) into a third electrical signal, said first, second and third electrical signals constituting said outputs provided by the sensing means (40, 50, 60).

8. A device according to Claim 7 further including resolver means (78) for utilsing said first, second and third signals for control purposes.

9. A device according to any one of the preceding claims further including: a second means (80 or 82 or 84) mounted peripherally of said ball (A) for movement around said ball (A); and fourth sensing means for sensing movement of said second means (80 or 82 or 84) mounted peripherally around said ball (A).

10. A device according to any one of the preceding claims further including further sensing means for sensing rotation of said ball (A) relative to a third axis.

11. A method of encoding variables (x, y, z or θ) comprising: rotating a ball (A); sensing rotation of the ball (A) relative to a first axis; and sensing rotation of the ball (A) relative to a second axis, the sensing providing outputs which encode the variables (x, y, z or θ), characterised in that said method further includes: moving a means (B) mounted peripherally of the ball (A) around the ball (A); and sensing the movement of the means (B) mounted peripherally.

12. A method according to Claim 11 further including: converting sensed rotation of the ball (A) relative to the first axis into a first electrical signal; converting sensed rotation of the ball (A) relative to the second axis into a second electrical signal; and converting sensed movement of the means (B) mounted peripherally into a third electrical signal, said first, second and third electrical signals constituting said outputs provided by the sensing.

13. A method according to Claim 12 further including utilising said first, second and third signals for control purposes.

14. A method according to any one of Claims 11, 12 or 13 further including: moving a second means (80 or 82 or 84) mounted peripherally of the ball (A) around the ball (A); and sensing the movement of the second means (80 or 82 or 84) mounted peripherally.

15. A method according to any one of Claims 11, 12, 13 or 14 further including sensing rotation of the ball (A) relative to a third axis.

FIG.1

FIG. 2